# EUROPÄISCHE PATENTSCHRIFT

(11) **EP 1 757 841 B1**
(45) Veröffentlichungstag und Bekanntmachung des Hinweises auf die Patenterteilung: **17.07.2013**
(21) Anmeldenummer: 05742507.6
(22) Anmeldetag: 25.04.2005
(51) Int. Cl.: F16H 25/06, F16H 1/32

(54) **KUGELGETRIEBE ZUR ÜBERTRAGUNG VON DREHUNG**
BALL GEAR FOR TRANSMITTING ROTATION
ENGRENAGE A BILLES POUR TRANSMISSION DE ROTATION

(30) Priorität: 27.04.2004 RU 2004113046
(43) Veröffentlichungstag der Anmeldung: 28.02.2007
(73) Patentinhaber: Joint Stock Company "Center of precise Machining process", Tomsk 634009 (RU)
(72) Erfinder: STANOVSKOY, Viktor Valdimirovich, Tomsk, 634063 (RU); KAZAKIAVICHIUS, Sergei Matveievich, Tomsk, 634063 (RU); REMNEVA, Tatiana Andreevna, Tomsk, 634028 (RU)
(74) Vertreter: Jeck, Anton
(86) Internationale Anmeldenummer: PCT/RU2005/000220
(87) Internationale Veröffentlichungsnummer: WO 2005/103528

(56) Entgegenhaltungen:
- EP-A2- 0 207 206
- GB-A- 2 130 334
- JP-A- 62 004 961
- RU-C1- 2 075 671
- US-A- 5 683 323

## Beschreibung

Die Erfindung gehört zum Bereich des allgemeinen Maschinenbaus, und zwar zur Drehmomentübertragung mittels einer Kette von Kugeln, die im Eingriff mit periodischen Elementen von auf der Oberfläche zusammenwirkenden Gliedern stehen. Diese Übertragungsart wird z. Z. aktiv weiterentwickelt, da sie in Getrieben von Maschinen und Mechanismen für breite Zwecke eingesetzt werden kann. Die drehmomentübertragenden Baueinheiten mit Wälzkörpern in Form von Kugeln zeichnen sich durch ein großes Leistungsvermögen und eine große Zuverlässigkeit aus. Sie sind einfacher als Zahnradgetriebe und in den Abmessungen kleiner im Vergleich zu gleichwertigen Belastungen und einem gleichen Übersetzungsverhältnis.

Bekannte Kugelverzahnungen können in Verzahnungen, in denen Kugeln mit periodischen Elementen von drei bzw. mehr Gliedern (US 5016487, US 4960003, RU 2179272) oder mit zwei Gliedern (US 4829851, US 4643047, RU 2179672) zusammenwirken, eingeteilt werden. Die Kugelverzahnung mit zwei Gliedern wird in Getrieben, in denen ein Glied eine Planetenbewegung ausführt (US 4829851, US 4643047), oder in Getrieben mit parallelen Wellen (RU 2179672) verwendet.

Bei der Drehmomentübertragung mittels einer Kugelverzahnung sind periodische Elemente auf den Oberflächen zusammenwirkender Glieder mit periodischen Kugelrillen versehen, die einen passenden Querschnitt und eine unterschiedliche Form aufweisen. Unter "Rille" wird hier eine Vertiefung, deren Querschnitt mit der Kugelform zusammenfällt, oder ein durchgehender Ausschnitt, dessen Breite dem Kugeldurchmesser gleich ist, verstanden. Im allgemeinen Fall können das ausgedehnte, im Kreis verteilte Rillen (RU 2179272, SU 1260604) oder durchgehende Ausschnitte (US 5312306), halbsphärische (RU 2179672) bzw. Toroidalmulden (US 4829851) sowie geschlossene, periodisch gebogene Kugelrillen mit Mantellinien in Form von Trochoiden, Zykloiden, Sinusoiden oder eines Kreises u. ä. (M. F. Paschkewitsch, Maschinenbauzeitschrift Nr. 7, 1985) sein. Periodische Elemente können miteinander in unterschiedlichen Kombinationen in Abhängigkeit von der Verwendung und Getriebebauart gekoppelt werden.

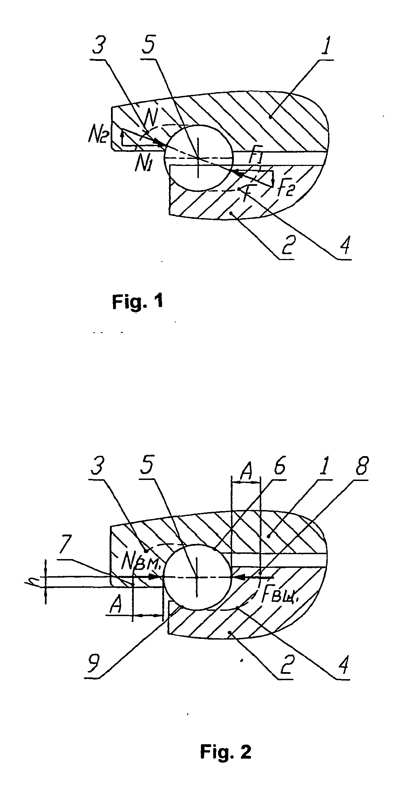

Als Prototyp wurde eine flache Kugelverzahnung eines dreisinusoiden Kugeltriebs (R. M. Ignatischtschew, Maschinenbauzeitschrift Nr. 2, 1987) genommen. In dieser Verzahnung sind geschlossene, periodisch gebogene Rillen in äußeren Scheibengliedern ausgeführt, und das mittlere Glied stellt einen Exzenterring dar, der auf Kugeln mittels seiner seitlichen Oberfläche wirkt. In diesem Fall kann die Rillentiefe den Halbdurchmesser der Kugel nicht überschreiten, da der Kugelkontakt mit gegenüberliegenden Rillen gestört wird. Es sei bemerkt, dass die Rillentiefe bei der Kugelverzahnung mit Ausschnitten in der vorderen Scheibe noch kleiner ist, da sie ein Drittel des Kugeldurchmessers nicht überschreiten darf. Trotz aller Vorteile des Kugeltriebs beeinflusst diese Bedingung die Kräfteverteilung bei der Drehmomentübertragung wesentlich, wobei sie diese Kräfteverteilung verschlechtert. In Fig. 1 ist die Kräfteverteilung in einer solchen Verzahnung abgebildet, in der F eine Kraft, die auf Kugel seitens eines Antriebglieds wirkt, und N eine Reaktionskraft eines Abtriebglieds darstellt. Die Kräfte F und N greifen an Kantennuten 3 und 4 an und weisen je zwei Teilkräfte F₁, F₂ und N₁, N₂ auf. Die Kräfte F₁ und N₁ sind Nutzkräfte, und N₂ wirkt in Axialrichtung und treibt die Übertragungsglieder 1 und 2 auseinander, wodurch ein Ausfallen der Kugel aus der Verzahnung erfolgen kann. Diese Kraft erhöht dazu die Reibkraft und verringert den Wirkungsgrad der Übertragung. Wegen der Kugelwirkung auf die Rillenkanten 3 und 4 erhöht sich außerdem die Wahrscheinlichkeit der Kugelzerstörung.

Durch JP 62004961 such als JP 362004961 veröffentlicht und das den nächstliegenden Stand der Technick beschreibt, A ist eine Kugelverzahnung zur Drehmomentübertragung bekannt. Diese umfasst Glieder mit periodischen Rillen auf einander zugewandten Gliedoberflächen und eine Kugelkette, die gleichzeitig mit Rillen aller Glieder in den Eingriff kommt, in denen die Gesamthöhe der periodischen Rillen eines zusammenwirkenden Paares den Kugeldurchmesser nicht überschreitet. Einander zugewandte Gliedoberflächen sind mit Rillen, die mit ihren Seitenwänden auf die Kugel wirken, stufig ausgeführt und gegenseitig stufig gekoppelt. Die Rillen sind auf diesen stufigen Oberflächen ausgeführt. Die Rillen sind derart miteinander gekoppelt, dass die in einem Bereich jeder Rille vergrößert ausgeführte Wandhöhe den Kugelradius wegen der Verringerung der gegenüberliegenden Rillenwände anderer Glieder überschreitet.

Durch US 5,683,323 ist ein Zykloidgetriebe mit einer Kugelverzahnung zur Drehmomentübertragung bekannt. Die Kugelverzahnung umfasst Glieder mit periodischen Rillen auf einander zugewandten Gliedoberflächen und eine Kugelkette. Die Kugelkette kommt gleichzeitig mit Rillen aller Glieder in Eingriff, in denen die Gesamthöhe der periodischen Rillen eines zusammenwirkenden Paars den Kugeldurchmesser nicht überschreitet. Ein zwischen den Rillen eines zusammenwirkenden Paares verbleibender Spalt verläuft parallel zu den Drehachsen der mit den periodischen Rillen versehenen Glieder. Der Spalt ist dabei in seinem axialen Verlauf frei von einem Versatz in radialer Richtung. Die Kugelverzahnung ist zwischen zwei Gliedern des Zykloidgetriebes wirksam, von denen eines eine Planetenbewegung ausführt. Hierbei handelt es sich um einen fest stehenden Grundkörper und ein Planetenbewegungen ausführendes Rad. An dem Rad angeordnete Stifte und an einem Ausgangsorgan vorgesehene kreisrunde Ausnehmungen mit einem der Summe der Exzentrizität der Planetenbewegung des Rads und dem Durchmesser eines Stifts entsprechendem Durchmesser, in welche Ausnehmungen jeweils einer der Stifte greifen, dienen als Transformationsmittel zur Umwandlung der Planetenbewegung des Rads in eine Drehbewegung des Ausgangsorgans.

Durch EP 0 207 206 A2 ist ebenfalls ein Zykloidgetriebe mit einer Kugelverzahnung zur Drehmomentübertragung bekannt. Die Kugelverzahnung umfasst auch hier Glieder mit periodischen Rillen auf einander zugewandten Gliedoberflächen und eine Kugelkette. Die Kugelkette kommt ebenfalls gleichzeitig mit Rillen aller Glieder in Eingriff, in denen die Gesamthöhe der periodischen Rillen eines zusammenwirkenden Paares den Kugeldurchmesser nicht überschreitet. Ein zwischen den Rillen eines zusammenwirkenden Paares verbleibender Spalt verläuft senkrecht zu den Drehachsen der mit den periodischen Rillen versehenen Glieder. Der Spalt ist dabei in seinem radialen Verlauf frei von einem Versatz in axialer Richtung.

Die Aufgabe der Erfindung besteht in einer Erhöhung des Wirkungsgrads und der Zuverlässigkeit der Übertragungseinheiten mittels einer Kugelverzahnung, insbesondere bei der Übertragung hoher Drehmomente.

Das technische Ergebnis der Erfindung ist eine bessere Verteilung der zusammenwirkenden Kräfte der Kugel und der Wände von periodischen Rillen sowie eine Verschiebung des Kugelkontaktbereichs von der Wandkante periodischer Rillen zum Boden der Rillen.

Die gestellte Aufgabe wird dadurch gelöst, dass die Kugelverzahnung zur Drehmomentübertragung, wie auch der Prototyp, Glieder mit periodischen Rillen auf einander zugewandten Oberflächen der Glieder und eine Kette von Kugeln enthält, die gleichzeitig mit den Rillen aller Glieder verzahnt werden, in denen die Gesamthöhe der periodischen Rillen eines zusammenwirkenden Paares den Kugeldurchmesser nicht überschreitet. Im Unterschied zum Prototyp sind einander zugewandte Gliedoberflächen mit Rillen, die auf Kugeln mit ihren seitlichen Wänden wirken, gestuft ausgeführt und gegenseitig stufig gekoppelt. Die Rillen selbst sind in diesen gestuften Oberflächen ausgeführt und miteinander so gekoppelt, dass die Seitenwandhöhe jeder Rille in einem Bereich größer ist und den Kugelradius wegen der Verringerung des gegenüberliegenden Rillenwandbereichs anderer Glieder überschreitet. Aufgrund dieser Erhöhung der entgegenwirkenden Rillenseitenwände verschieben sich die Kontaktpunkte der Kugel derart, dass die seitens dieser Rillen auf die Kugeln wirkenden Kräfte auf einer Geraden liegen und nur eine Teilkraft ausüben, die die Nutzarbeit leistet.

Die Kugelverzahnung ist zur Drehmomentübertragung in einem Getriebe mit zwei Gliedern vorgesehen, von denen eines eine Planetenbewegung ausführt. Die Kugelverzahnung ist durch eine an einem ersten Glied angeordnete geschlossene, umlaufende periodische Rille und an einem zweiten Glied ausgebildete, der Anzahl der Kugeln der Kugelkette entsprechende Anzahl von Toroidalmulden gebildet. Die Toroidalmulden weisen jeweils einem dem Kugelradius entsprechenden Drehkreisradius auf.

Die Erfindung kann in jeder Art von Kugelverzahnungen und in jeder bekannten Form der gekoppelten Rillen verwendet werden. Dies kann eine Verzahnung der Kugel mit zwei, drei und mehr Gliedern sein. Rillen können sowohl auf flachen Scheibenoberflächen (flache Kugelverzahnung) als auch auf zylindrischen oder sphärischen Oberflächen ausgeführt werden. Die Rillen können eine Biegung aufweisen und periodische Bewegungen der Kugel in Axial- und Radialrichtung bewirken.

Im Folgenden wird die Erfindung anhand von Figuren beschrieben, die die Zusammenwirkung der Kugel mit unterschiedlichen Arten von periodischen Nuten in gekoppelten Gliedern zeigen. Neben der bereits beschriebenen Fig. 1 zeigen:
- Fig. 2: einen Schnitt durch eine flache Kugelverzahnung mit zwei Scheibengliedern,
- Figuren 3 und 4: eine Art der periodischer Rille jedes Glieds für dieselbe Verzahnung,
- Fig. 5: einen Schnitt durch ein Scheibengetriebe mit zwei Gliedern und mit Toroidalmulden in einem Glied,
- Figuren 6 und 7: perspektivische Ansichten von periodische Rillen mit entsprechenden Gliedern nach Fig. 5,
- Figuren 8, 9 und 10: zeigen dieselbe Ansichten wie in den Figuren 5-7, aber für die Kopplung einer Zykloide und einer halbsphärischen Mulde,
- Fig. 11: einen Schnitt durch eine Kugelverzahnung mit drei Gliedern,
- Fig. 12: eine perspektivische Ansicht auf das Glied der Fig. 11 mit verteilten Radialnuten,
- Fig. 13: ein weiteres Beispiel mit einer im Schnitt dargestellten Dreigliedverzahnung,
- Fig.14: eine Explosionsansicht eines Getriebes mit der Verzahnung nach Fig. 13,
- Fig. 15: eine perspektivische Ansicht eines Teils von einem der Glieder des Getriebes der Fig. 13,
- Figuren 16 und 17: ein drittes Beispiel der Dreigliedverzahnung, Verzahnung im Schnitt (Fig. 16) und Antrieb auseinandergebaut (Fig. 17), und
- Fig. 18: einen Schnitt durch ein zylindrisches Getriebe mit einer Axialbewegung der Kugeln.

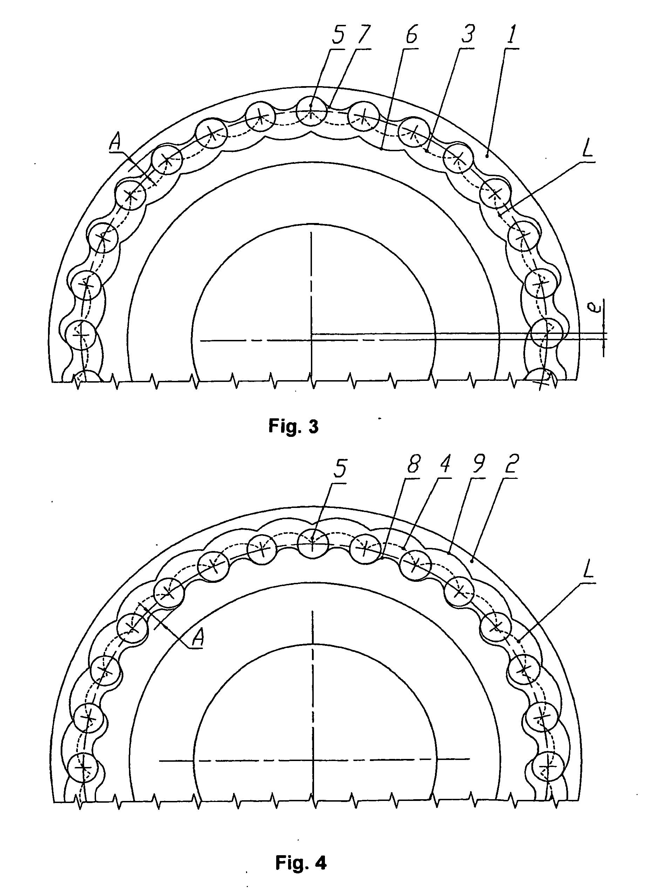

Betrachtet wird zunächst eine flache Kugelverzahnung in den Figuren 2, 3 und 4, bei der auf flachen Oberflächen von Übertragungsscheiben 1 und 2 periodische Rillen in Form von geschlossenen, periodisch gebogenen Wälzlaufbahnen 3 und 4 mit unterschiedlicher Periodenzahl und gleicher Amplitude (Höhe) A ausgeführt sind. Grundsätzlich können Amplituden der Laufbahnen auch unterschiedliche Größen aufweisen. Diese Bedingung beschränkt aber nicht den Anwendungsbereich der Erfindung. In der Kreuzung der Rillen 3 und 4 sind Kugeln 5 angeordnet, die die Wände beider Rillen kontaktieren. Jede geschlossene Rille hat zwei seitliche Wände, deren Kanten die Form von Kurven haben, die von der Mittellinie L der periodischen Laufbahn nach innen und außen äquidistant verschoben sind. In der Rille 3 sind das die Wände 6 und 7 und in Rille 4 die Wände 8 und 9 (Figuren 3 und 4). Es sei bemerkt, dass sich für eine Rille mit mehreren Perioden die Form der Kurven voneinander und von der Form der Mittellinie unterscheidet, wie in den Figuren 3 und 4 dargestellt ist. Unterschiede sind bei großen Kugeln, bei größerer Periodenzahl und kleiner Amplitude wichtig (das ist Bedingung für die Übertragung hoher Belastungen). Die Wirkung der Verkürzung von Wälzlaufbahnen vergrößert diese Unterschiede ebenso. Somit haben gegenüberliegende Wände einer Rille mit mehreren Perioden in Kugelverzahnung für hochbelastete Übertragung in der Regel unterschiedliche Steigungswinkel. Die Belastung wird im Wesentlichen durch die Wand in Form einer Kurve mit großem Steigungswinkel übertragen, und die gegenüberliegende Wand fixiert nur die Kugel in einer bestimmten Lage und bringt sie während des Nichtarbeitszyklus zurück. Auf der Scheibe 1 ist die Wand 7 und auf Scheibe 2 die Wand 8 belastet. Gegenüberliegende Wände 6 und 9 sind keine wirkenden Wände; ihre Höhe kann verringert werden, um so mehr kontaktieren diese Wände wegen der Verkürzungswirkung mit Kugeln nicht in Linien 6 und 9, sondern nur in Abschnitten, die tiefer liegen. Die Wände 6 und 9 fixieren nur die Lage jeder Kugel in der Verzahnung. Diese Verzahnung wird vorzugsweise bei der Übertragung hoher Geschwindigkeiten eingesetzt. Bei hohen Drehgeschwindigkeiten wirken auf die Kugeln 5 ziemlich hohe Zentrifugalkräfte, die die Kugelbewegung bei fehlender, fixierter Lage im Raum stören können. Deswegen können die Wände 6 und 9 in dieser Verzahnung nicht vollständig abgeschnitten werden, da die Funktion, Kugeln während des Nichtarbeitszyklus zurückzubringen, sehr wichtig ist.

Die Anordnung der Wand mit hohem Steigungswinkel hängt von der Ausführung der Übertragungseinheit ab. Für zykloide Rillen ist folgende Regel gültig. Wenn die Periodenzahl der Rille höher als die Kugelanzahl ist, ist der Steigungswinkel der Außenwand 7 dieser Rille größer als der Steigungswinkel der Innenwand 6, und sie ist höher belastet. Diese Regel bildet Fig. 3 ab, bei der in der Rille 3 mit 28 Kugeln 29 Perioden auftreten. Zur besseren Kräfteverteilung in der Verzahnung hat die Außenwand 7 eine Höhe, die um den Wert h größer als der Kugelradius ist (s. Fig. 2). Um den Kugelkontakt mit beiden Wänden der Rillen 3 und 4 nicht zu verlieren, hat die erhöhte Wand 7 der ersten Rille 3 in der gegenüberliegenden Wand 9 in Rille 4 eine Höhe, die um den Wert h kleiner ist. Dementsprechend ist die Innenwand 8 in Rille 4 mit 27 Perioden eine wirkende Wand, die ebenso eine größere Höhe wegen der Verringerung der gegenüberliegenden Wand 6 der Rille 3 aufweist. Zur Ausführung in der Praxis werden gekoppelte Oberflächen der Übertragungsglieder im Bereich der periodischen Rillen stufig gekoppelt ausgeführt, und die Rillen werden in diesen stufig gekoppelten Oberflächen ausgeschnitten. Da sich die Glieder 1 und 2 gegeneinander drehen, ist eine solche Änderung der Wandhöhe nur für Rillen möglich, deren Gesamtamplitude den Kugeldurchmesser nicht überschreitet. Nur in diesem Fall liegen beim gegenseitigen Drehen der Glieder die erhöhten Wände den verringerten Wänden gegenüber und kommen miteinander nicht in Eingriff. Fig. 2 zeigt die Kräfteverteilung, die auf die Rillenwände und Kugel wirken. Daraus ist ersichtlich, dass diese Kräfte F_{BW} und N_{BM} nur radiale Teilkräfte haben, die größer als entsprechende Teilkräfte beim Prototyp sind. Die Abwesenheit einer zweiten Teilkraft vermindert die Reibung in der Verzahnung und erübrigt einen zusätzlichen Druck der Scheiben 1 und 2 aufeinander. Außerdem verschiebt sich der Kontaktbereich der Kugel mit Rille von der Rillenkante, wodurch die Wahrscheinlichkeit für ihre mögliche Zerstörung vermindert wird.

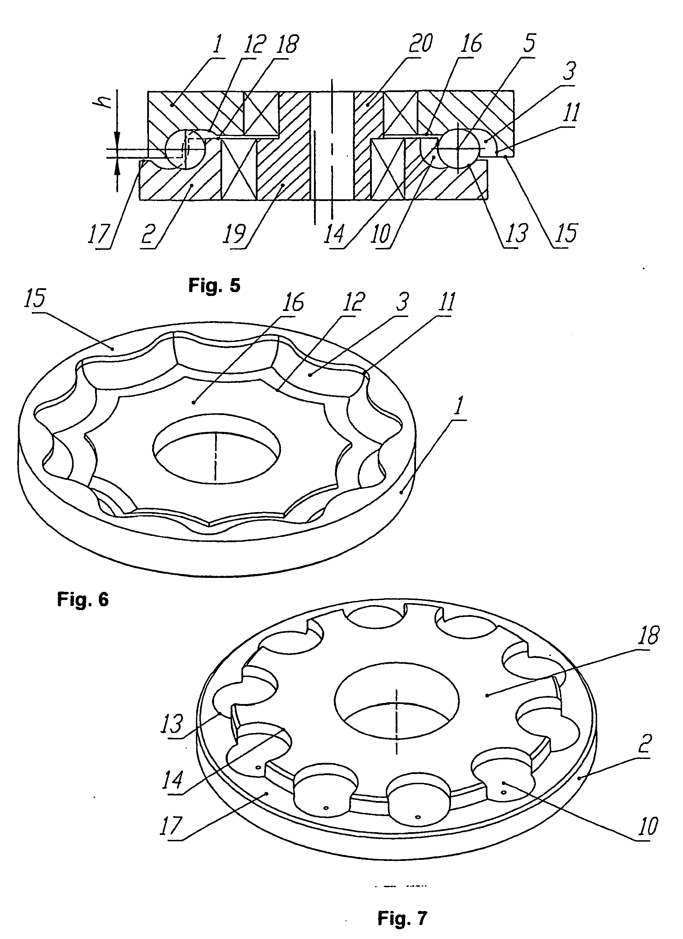

Fig. 5 zeigt eine Kugelverzahnung, die durch eine geschlossene, periodische Rille 3 und eine Toroidalmulde 10 gebildet ist, die einen dem Kugelradius entsprechenden Drehkreisradius aufweisen. Diese Verzahnung ist nur für eine Übertragungseinheit möglich, die aus Zweischeibengliedern 1 und 2 besteht. Die Figuren 6 und 7 zeigen eine Ansicht der periodischen Rillen dieser Glieder. Seitliche Wände der geschlossenen Rille 3 werden mit den Bezugsziffern 11 und 12 bezeichnet. Die Höhe einer seitlichen Wand 11 in der Rillennut 3 ist um den Wert h größer als der Kugelradius 5. Um dieselbe Größe ist auch die Wandhöhe der Mulde 10 im gegenüberliegenden Bereich 13 auf der Scheibe 2 verringert. Auf diese Weise ist die Wandhöhe der Mulde 10 im Bereich 14, der dem Bereich 13 gegenüberliegt, erhöht. Um den Kugelkontakt 5 mit beiden Rillen 3 und 4 sicherzustellen, ist die Höhe der Wand 12 der Rille 3 verringert. Die Oberfläche der Scheibe 1 ist durch Stufen 15 und 16 gebildet, und an ihrer Kreuzung ist die Rille 3 ausgeführt. Die Oberfläche der Scheibe 2 ist ebenso durch Stufen 17 und 18 gebildet, aber die Stufen wechseln im Vergleich zur Scheibe 1 ihre Lage, d.h. die Oberflächen der Scheiben 1 und 2 sind stufig miteinander gekoppelt. Alle obigen Betrachtungen der Kräfteverteilung und der Erhöhung der Lebensdauer sind für diese Verzahnung richtig. Im Getriebe wird die Scheibe 2 mit einer Drehmöglichkeit am Exzenter 19 einer Antriebswelle 20 angeordnet. Die Scheibe 1 ist mittels Lagern bezüglich der Achse der Antriebswelle 20 zentriert. Die Scheibe 2 macht bezüglich der Scheibe 1 eine ebene Planetenbewegung, und beide Scheiben können sich um die eigene Achse drehen. Wenn eine der Scheiben, beispielsweise die Scheibe 1, gestoppt wird, wird sich die zweite Scheibe um die eigene, bewegliche Achse mit einem Übersetzungsverhältnissen. Um diese Bewegung zur unbeweglichen Übertragungsachse zu bringen, wird ein zusätzlicher Mechanismus, beispielsweise ein Mechanismus mit parallelen Kurbeln (in Fig. 5 nicht gezeigt) benötigt.

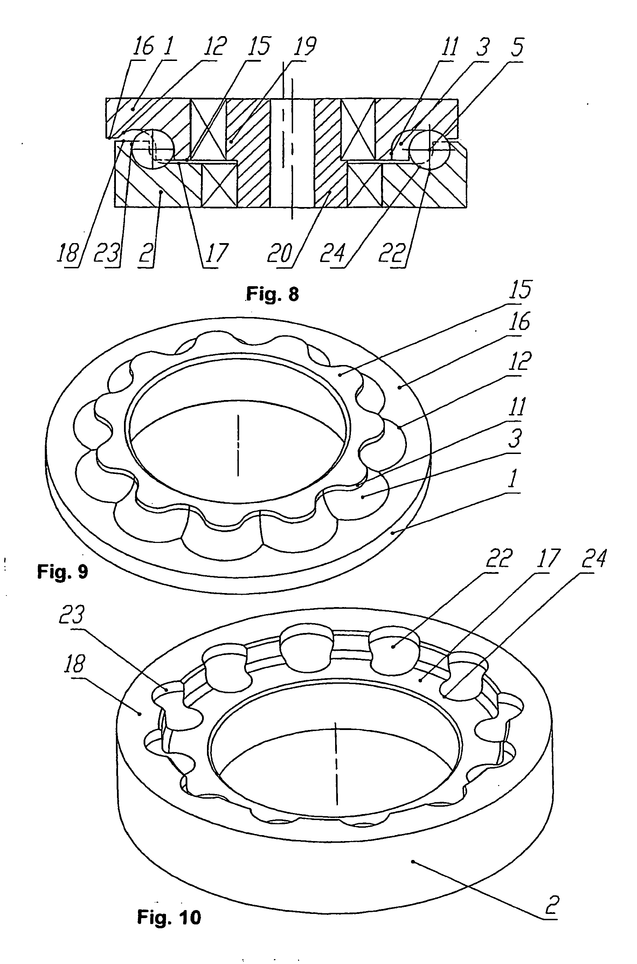

Fig. 8 zeigt eine Kugelverzahnung mit geschlossener, periodischer Rille 3 und halbsphärischem Mulden 22 auf den einander zugewandten Oberflächen der Scheibenglieder 1 und 2, und die Figuren 9 und 10 zeigen Scheiben 1 und 2 mit periodischen Rillen. In dieser Verzahnung wird die Wand 11 der periodischen Rille 3 mit einer Höhe ausgeführt, die den Kugelradius überschreitet. Ein Teil der Wand 23 der Mulde 22 hat eine Höhe, die ebenso den Kugelradius überschreitet. Die Rillenbereiche 3 und 22, die erhöhten Wänden gegenüberliegen, haben eine Wandhöhe, die um denselben Wert verringert wird. In dieser Verzahnung sind die Wand 12 der Rille 3 und der Bereich 24 der Muldenwand 22 vorhanden. Einander zugewandte Oberflächen der Scheiben 1 und 2 sind gestuft ausgeführt, und die Stufen 15 und 16 einer Scheibe werden mit Stufen 17 und 18 einer anderen Scheibe gekoppelt. Im Getriebe wird am Exzenter 19 der Antriebswelle 20 die Scheibe 1 mit einer Drehmöglichkeit angeordnet.

Es sei bemerkt, dass die Verzahnungen, die in den obigen Figuren abgebildet sind, in zwei Bauweisen verwendet werden können. Eine Bauweise ist das Planetengetriebe mit einem Exzenter, in dem eine der Scheiben am Exzenter der Antriebswelle angeordnet ist (wie in den Figuren 5 und 8). In der anderen Bauweise sind die Scheiben 1 und 2 im Gehäuse nicht in Achsflucht drehbar angeordnet. Dieses Getriebe ist einem normalen Zahnradgetriebe mit parallelen Wellen ähnlich, doch die Verzahnung geschieht mittels Kugeln. Beide Bauweisen haben unterschiedliche Übersetzungsverhältnisse, aber in der Verzahnung beider Getriebe werden Kraftparameter durch die Erfindung verbessert.

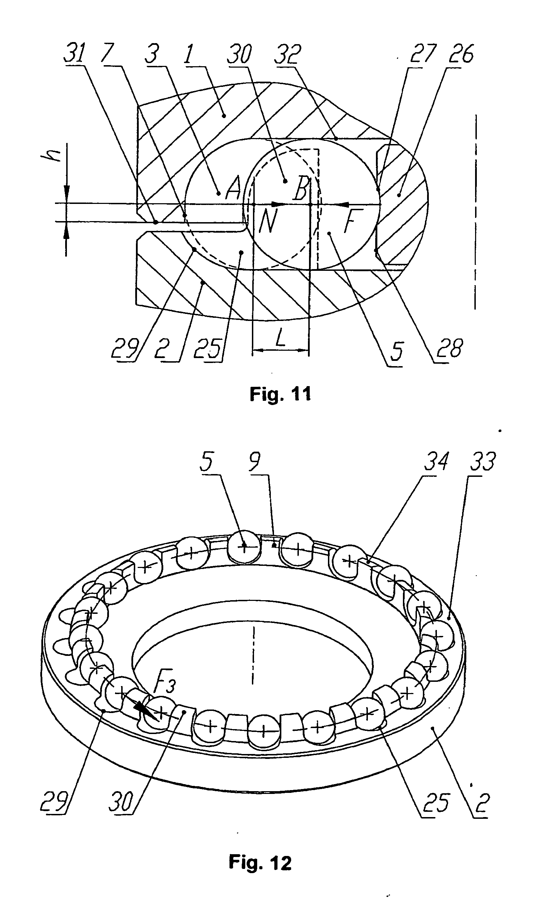

Im Folgenden werden Baueinheiten beschrieben, in denen Kugeln mit periodischen Elementen von drei Gliedern zusammenwirken. In zweigliedrigen Getriebeeinheiten macht die Kugel 5 eine Schwingungsbewegung zusammen mit einer der Scheiben in Bezug auf die andere Scheibe. In dreigliedrigen Antrieben macht die Kugel in der Regel eine Schwingungsbewegung in Bezug auf zwei Glieder. Bei der Wellenbewegung der Kugel in Bezug auf das eine Glied mit den im Kreis verteilten Rillen ist es wichtig, dass die Kugelmitte den Abstand zwischen den Rillen nicht überschreitet. Ein Beispiel für dieses Getriebe zeigen die Figuren 11 und 12. Zwei Scheibenglieder 1 und 2 haben auf einander zugewandten Flächen periodische Rillen. Auf der Scheibe 1 ist das eine periodisch gebogene, geschlossene Laufbahn 3 und auf Scheibe 2 ein System von im Kreis verteilten Radialrillen 25. Ein drittes Glied ist eine Scheibe 26, die auf der Kugel 5 durch die Rille 27 auf ihrer Seitenoberfläche wirkt. Die Kugel 5 kontaktiert die Rille 27 im Bereich des Bodens dieser Rille. Die Nut 27 kann eine bzw. mehrere Perioden oder eine Ringform aufweisen. Im letzten Fall soll die Scheibe 26 eine Planetenbewegung ausführen. Die periodische Laufbahn 3 auf der Scheibe 1 weist nur eine seitliche Wand 7 auf; die gegenüberliegende Wand ist abgeschnitten, um die Scheibe 26 anzuordnen. Die Seitenwand 7 der Rille 3 ist um den Wert h erhöht; dazu werden die Wände 29 der Rillen 25 im gegenüberliegenden Bereich verringert. Jetzt befindet sich der Kontaktbereich der Laufbahn 3 mit der Kugel 5 (in Fig. 11 mit A bezeichnet) auf einer Geraden, die mit der Richtung der Kraft F, die die Nutzarbeit leistet, übereinstimmt. Dementsprechend sollen die Wände der Radialrillen 25, die den abgeschnittenen Wänden der Laufbahn 3 gegenüberliegen, erhöht werden, damit die Tangentialkraft F₃ (s. Fig. 12), die durch Mitte der Kugel 5 hindurchgeht, auf die Wände in normaler Richtung in Bezug auf ihre Oberfläche wirkt. Die erhöhten Rillenwände 25 sind mit einem Vorsprung 30 versehen. Die Dicke L des Vorsprungs 30 im Bereich der Kugelmitte soll dabei derart bemessen sein, dass die Mitte der Kugel 5 bei der Wellenbewegung dieser Kugel die Radialrillen 25 nicht überschreitet. Deswegen ist die Vorsprungsoberfläche 30, die der periodischen Laufbahn 3 zugekehrt ist, konvex ausgeführt, und diese Vorsprungsoberfläche fügt sich in die Oberfläche der Laufbahn 3 ein. In Wirklichkeit besteht die Oberfläche der Scheibe 1, die der Scheibe 2 zugekehrt ist, aus zwei Stufen, die durch Oberflächen 31 und 32 gebildet werden. Die Oberfläche der Scheibe 2 besteht genauso aus Stufen 33 und 34, die mit den Stufen 31 und 32 der Scheibe 1 gekoppelt sind.

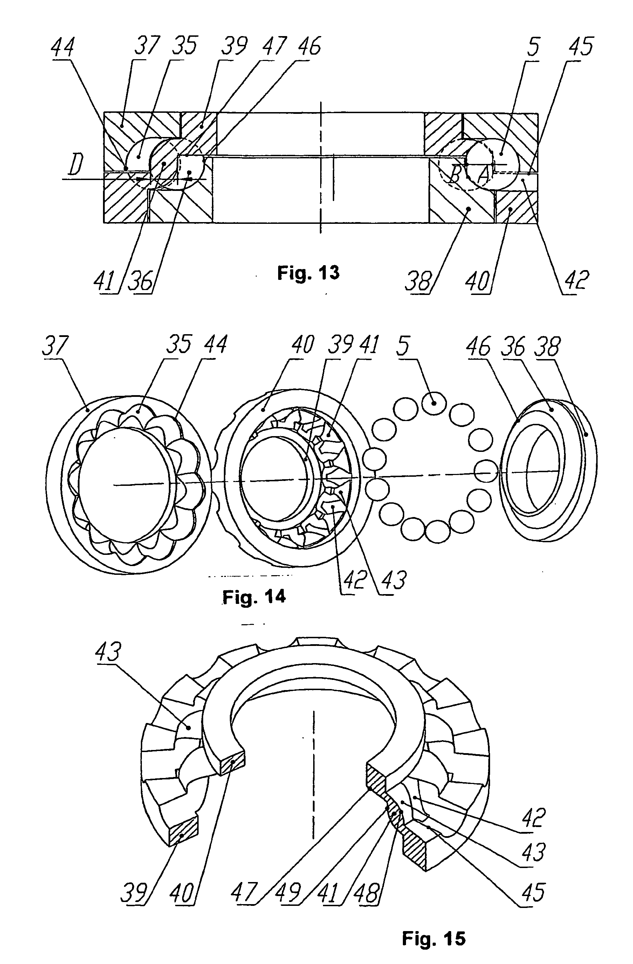

Im Folgenden wird nun ein Ausführungsbeispiel einer Kugelverzahnung beschrieben, die in den Figuren 13, 14 und 15 gezeigt ist und geschlossene, periodische Laufbahnen 35 und 36 in Schellen 37 und 38 aufweisen. Die periodischen Elemente sind in Form von durchgehenden Ausschnitten in der Schelle komplizierter Form ausgeführt, die aus zwei Zylindern 39 und 40 unterschiedlichen Durchmessers besteht. Die Zylinder werden durch einen Teil 41 verbunden, in dem die eigentlichen, durchgehenden Ausschnitte 42 mit Abständen 43 angeordnet sind. Die Höhe der Seitenwand 44 der Laufbahn 35 ist größer als der Kugelradius 5 wegen der Verminderung der Wandhöhe 45 der Ausschnitte 42 im gegenüberliegenden Bereich. Die zweite Seitenwand der Laufbahn 35 ist abgeschnitten. Eine Seitenwand 46 der Laufbahn 36 ist ebenso höher als der Kugelradius wegen der Verminderung der Wandhöhe 47 der Ausschnitte 42 im gegenüberliegenden Bereich. Die zweite Seitenwand der Laufbahn 36 ist abgeschnitten. Die Ausschnittwände 42 sind stufig ausgeführt und weisen eine erhöhte Dicke wegen der Verminderung der gegenüberliegenden Wände der Laufbahnen 35 und 36 auf. Im Bereich der Kugelmitte weisen die Wände eine in Gegenrichtung konvexe Form 48 und 49 auf, die sich in die Oberfläche der Laufbahnen 35 und 36 einfügen. Als Folge ist die Dicke D der Ausschnittswände 42 in der Fläche der Kugelmitte vergrößert ausgeführt, und die Kugelmitte 5 (Punkte A und B in Fig. 13) überschreitet die Ausschnittswände bei einer wellenförmigen Radialbewegung nicht. Die Einhaltung dieser Bedingung bewirkt eine Tangentialdruckkraft der Kugel auf die Ausschnittswände in normaler Richtung auf die Oberfläche dieser Wände.

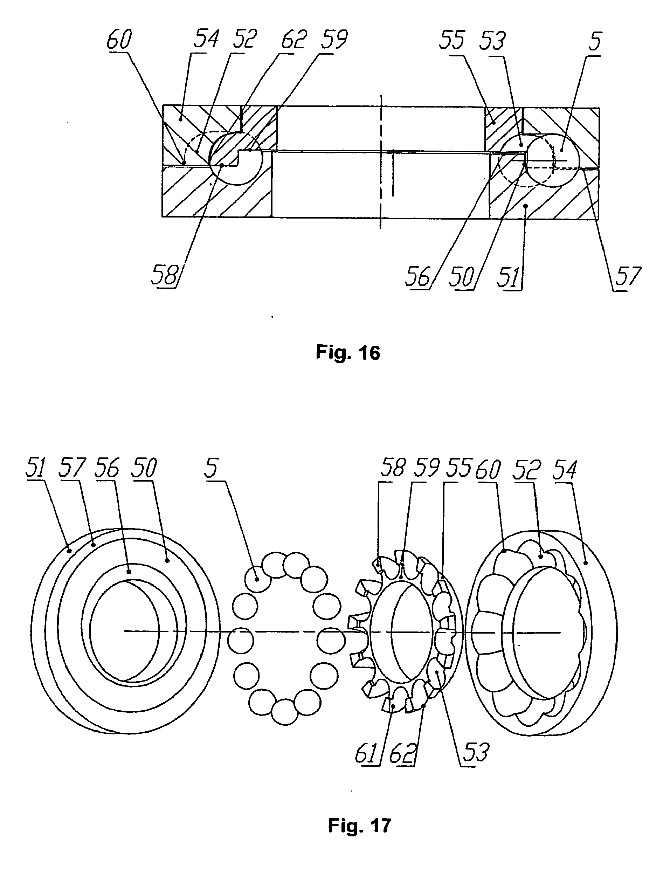

Im Folgenden wird ein weiteres Ausführungsbeispiel einer Kugelverzahnung mit drei Gliedern nach den Figuren 16 und 17 betrachtet. In diesem Fall wird eine der geschlossenen, periodischen Wälzlaufbahnen 50 auf der ebenen Oberfläche der Scheibe 51 in Form eines exzentrisch verschobenen Kreises ausgeführt. Eine weitere geschlossene, periodische Laufbahn 52 und verteilte Radialrillen 53 werden in der Flächenkreuzung der Schellen 54 und 55 ausgeführt. Die innere Seitenwand der Laufbahn 50 ist erhöht, und die äußere Wand ist vermindert ausgeführt. Somit bilden sie Stufen 56 und 57 auf der Scheibenoberfläche 51. Die gegenüberliegende Oberfläche der Schelle 55 ist genauso stufig mit einer Umkehrlage der Stufen 58 und 59 ausgeführt. Somit ist ein Wandbereich der Rillen 53 höher (im Bereich der Stufe 58) und ein anderer Bereich niedriger (Stufe 59). Dementsprechend ist die der verringerten Seitenwand 50 in der Scheibe 51 gegenüberliegende Seitenwand 60 der Laufbahn 52 in der Schelle 54 höher und die Innenwand abgeschnitten ausgeführt. Damit die Kugelmitte 5 bei der Radialbewegung Abstände 61 zwischen den Radialrillen 53 der Schelle 55 nicht überschreitet, weist die äußere Seitenoberfläche 62 der Abstände 61 eine konvexe Form auf, die sich in die Oberfläche der Wälzlaufbahn 52 der Schelle 54 einfügt.

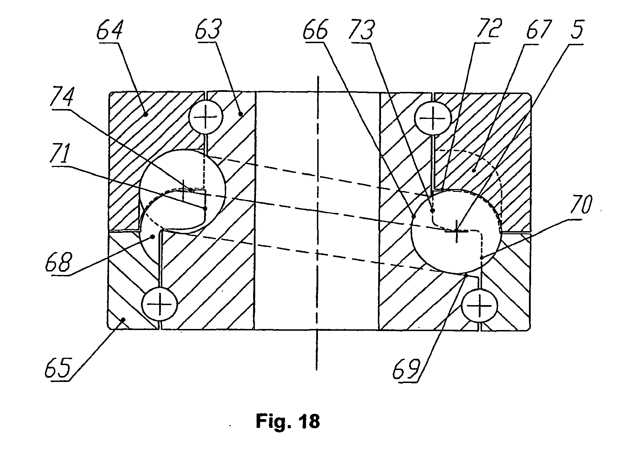

Zuvor wurde eine Ausführung der Erfindung als flache Kugelverzahnung betrachtet. Alle Betrachtungen und Anforderungen sind aber auch für zylindrische und sphärische Verzahnungen gültig, in denen die Wälzlaufbahnen auf Kugeln mit der Kante der Seitenwand der Wälzlaufbahnen wirken. Unter einer Zylinderverzahnung wird in diesem Fall verstanden, dass die Wälzlaufbahnen auf einer zylindrischen Seitenoberfläche der Glieder in Form von Schellen ausgeführt werden. Als Beispiel wird im Folgenden eine zylindrische Kugelverzahnung nach Fig. 18 betrachtet. Das Getriebe besteht aus einer Schelle 63 und aus Schellen 64 und 65, die die Schelle 63 umfassen. Auf der zylindrischen Außenoberfläche der Schelle 63 ist eine periodische Wälzlaufbahn 66 gebildet. In diesem Fall ist es eine Schrägrille. In den Schellen 64 und 65 werden periodische Elemente am Stoß der Schellen auf ihren zylindrischen Innenoberflächen ausgebildet. In der Schelle 64 ist das eine in Axialrichtung periodisch gebogene Wälzlaufbahn 67, und in der Schelle 65 sind das im Kreis verteilte Axialrillen 68. In der Laufbahn 66 ist die Seitenwand 69 höher als der Kugelradius 5 wegen der verminderten Wandhöhe 70 der Rillen 68 im gegenüberliegenden Bereich. Dementsprechend sind die Wände der Rillen 68 im Bereich 71 höher. Die Laufbahn 67 hat eine erhöhte Wand 72 wegen der Verminderung der gegenüberliegenden Wand 73 der Schrägrille 66. Damit die Kugel 5 bei der wellenförmigen Axialbewegung den Abstand zwischen den Axialrillen 68 nicht überschreitet, wird die Außenoberfläche dieser Axialrillen konvex ausgeführt und in die Oberfläche der periodischen Rille 67 eingefügt.

Es sei bemerkt, dass die in den Figuren dargestellte Bauweise den Anwendungsbereich der Kugelverzahnung gemäß der vorliegenden Erfindung keinesfalls beschränkt. Sie ist in jeder Kugelverzahnung, in der es Rillen gibt, die auf Kugeln mit Kanten der Rillenseitenwand wirken, anwendbar.

Die Arbeitsweise der Einrichtung wird am Beispiel der Kugelverzahnung mit zwei periodischen Elementen in Form von geschlossenen, zykloiden Laufbahnen nach den Figuren 2, 3 und 4 beschrieben. Die Scheibe 1 ist eine Antriebsscheibe, die in eine ebene Umlaufbewegung mit einer Exzentrizität ε in Bezug auf die unbewegliche Scheibe 2 gebracht wird. Die Laufbahn 3 weist eine Periode mehr als die Kugelzahl 5, und die Laufbahn 4 weist eine Periode weniger als die Kugelzahl auf. Die wirksame Wand der Laufbahn 3 ist Außenwand 7, die einen großen Steigungswinkel aufweist. Der Druck der Wand 7 wird durch die Kugel 5 auf die Wand 8 der Laufbahn 4 übertragen. Die Zusammenwirkung der Kugel 5 und der Wände 7 und 8 der Laufbahnen 3 und 4 dreht die Scheibe 1 um ihre bewegliche Achse um einen Winkel, der von der Periodenzahl der Laufbahnen 3 und 4 in den Scheiben 1 und 2 abhängt. Um das Drehen der Scheibe 1 zur unbeweglichen Achse der Scheibe 2 zurückzuführen, wird ein zusätzlicher Mitnahmemechanismus zwischen den parallelen Wellen benötigt. Diese Mechanismen sind gut bekannt und für die Erfindung nicht wichtig. Da die Höhe der entgegenwirkenden Wände 7 und 8 erhöht ist und den Kugelradius um den Wert h überschreitet, wird die Kugelkraft nicht auf die Wandkanten, sondern auf einen Bereich, der von Kanten verschoben ist, gerichtet. Die Druckkräfte der Wände und der Kugel laufen eine Gerade entlang und haben keine axialen Teilkräfte, die die Scheiben 1 und 2 auseinander treiben und die Reibungskraft erhöhen.

Die Arbeitsweise der Kugelverzahnung einer geschlossenen, periodischen Laufbahn in einem Glied mit Rillen unterschiedlicher Form nach den Figuren 5-10 unterscheidet sich von der Arbeitsweise der o. g. Verzahnung allein durch das Übersetzungsverhältnis. Das Drehen der Antriebswelle 20 mit Exzenter 19 bewirkt eine ebene Umlaufbewegung der Scheibe 1 mit der geschlossenen, periodischen Laufbahn 3. Die Scheibe 2 wird als unbewegliches Reaktionsglied eingesetzt. Die Zusammenwirkung der Kugel 5 mit den Wänden 11 der Laufbahn 3 und mit den Wänden 14 der Mulden 10 bewirkt ein Drehen der Scheibe 1 in Bezug auf die unbewegliche Scheibe 2. Da die Scheibe 1 außer der Drehung um die eigene Achse zusätzlich eine Umlaufbewegung ausführt, wird ein zusätzlicher Mechanismus, der das Drehen der Scheibe 1 zur Antriebsachse ausführt, wie im obigen Fall benötigt (in den Figuren nicht gezeigt). Da die Wand 11 der Laufbahn 3 und der Bereich der den Mulden 10 zugehörigen Wände 14 den Kugelradius 5 überschreiten, werden die Kräfte, die zwischen den Wänden der periodischen Elemente und der Kugel wirken, besser verteilt; ferner verschwindet die die Scheiben auseinander treibende Kraft, wodurch der Wirkungsgrad der Kugelverzahnung erhöht wird. Die Verschiebung des Bereichs, in dem die Rillenwände und die Kugel zusammenwirken, von der Wandkante verringert den Wandverschleiß der periodischen Elemente, die mit der Kugel zusammenwirken, und erhöht die Lebensdauer.

Die Arbeitsweise der Einrichtung in den Figuren 8, 9 und 10, in der die Kugel 5 in einer halbsphärischen Mulde 22 sitzt und mit der geschlossenen, periodischen Laufbahn 3 in Eingriff kommt, ist der o. g. Verzahnung ähnlich, mit Ausnahme der Kugel, die sich während der Verzahnung in der halbsphärischen Mulde einfach dreht. Alle früheren Betrachtungen sind auch für diese Einrichtung gültig.

Um die Kugelverzahnung, in der periodische Elemente als geschlossene Rollrillen und Radialausschitte in drei zusammenwirkenden Gliedern ausgeführt sind, zu beschreiben, sei die Antriebsscheibe die Scheibe 26 und das unbewegliche Reaktionsglied die Scheibe 1 mit der Laufbahn 3. Die Antriebsscheibe 26 wirkt auf die Kugeln 5 mit dem Boden ihrer Rollrille 27. Die Bewegung der Kugel 5 den Radialrillen 25 entlang und ihre orbitale Bewegung, verursacht durch ihr Zusammenwirkung mit der Wand 7 der unbeweglichen, periodischen Laufbahn 3, lösen ein Drehen der Scheibe mit den Radialrillen 25 in Bezug auf die Scheibe 1 aus. Die Kugel wirkt dabei in den Radialrillen 25 im Bereich zwischen den Punkten A, B. In diesem Bereich ist die Wandhöhe 30 größer als der Kugelradius 5. Somit liegen die Kraft F, die auf die Kugel seitens der Scheibe 26 wirkt, und die Kraft N, die auf die Kugel seitens der Wand 7 der geschlossenen Laufbahn auf der Scheibe 1 wirkt, auf einer Geraden, die nicht durch die Kanten der Rollrillen geht. Diese Kräfte wälzen die Kugel 5 in den Wänden der geschlossenen Laufbahn 3 in azimutaler Richtung ab, wobei sie auf die Wände der Radialrille mit einer Tangentialkraft F3 (Fig.12) wirken und die Scheibe 2 in eine Drehbewegung in Bezug auf die Scheibe 1 bringen. Aus Fig. 12 ist ersichtlich, dass die Kugel 5 auf dem Vorsprung 30 des Abstands zwischen den Radialrillen 25 wirkt, deren Höhe den Kugelradius überschreitet. Somit erfolgt die Zusammenwirkung der Kugel 5 mit allen drei Laufbahnen nicht an den Kanten, sondern tiefer von der Kante, wodurch die Wahrscheinlichkeit einer Rillenzerstörung infolge von Verschleiß vermindert wird. Alle Kräfte leisten Nutzarbeit und haben keine Teilkräfte, die die Reibungskraft bzw. das Auseinandertreiben der Scheiben 1 und 2 erhöhen.

Ganz ähnlich ist Arbeitsweise in den anderen dreigliedrigen Kugelverzahnungseinheiten nach den Figuren 13-17. Bei diesen Verzahnungen besitzen die wirksamen Wandbereiche der Laufbahnen eine größere Höhe, und die Höhe der gegenüberliegenden, nicht wirksamen Wandbereiche der anderen Glieder ist dadurch kleiner.

Die Arbeitsweise einer Kugelverzahnung mit drei zylindrischen Gliedern nach der Fig.18 ist ähnlich. Das Drehen der Schelle 63 mit einer Schrägrille 66 löst eine Bewegung der Kugel 5 in Axialrichtung aus. Bei dieser Bewegung wirken die Kugeln mit der geschlossenen, periodischen Laufbahn 67 in der Schelle 64 und gleichzeitig mit Axialrillen 68 in der Schelle 65 zusammen. Falls eine der Schellen 64 bzw. 65 unbeweglich ist, dreht sich eine Schelle um die Drehachse mit einem Drehwinkel, den die Periodenzahl der Laufbahn 3 bestimmt. Die Kugel befindet sich fast immer im geschlossenen Bereich zwischen den Wänden mit der größeren Höhe. Die wirksamen Kräfte der Kugel und der Rillenwände werden nur durch die Axialkraft und die Tangentialkraft (für Axialrillen) gebildet, die die Nutzarbeit leisten. Dies erhöht die Leistung der Kugelverzahnung und deren sichere Funktion wie in allen o. g. Fällen.

## Patentansprüche

1. Kugelverzahnung zur Drehmomentübertragung, die Glieder (1, 2) mit periodischen Rillen (3, 4) auf einander zugewandten Gliedoberflächen und eine Kugelkette umfasst, die gleichzeitig mit Rillen aller Glieder (1,2) in den Eingriff kommt, in denen die Gesamthöhe (A) der periodischen Rillen (3,4) eines zusammenwirkenden Paars den Kugeldurchmesser nicht überschreitet, wobei einander zugewandte Gliedoberflächen mit Rillen (3,4), die mit ihren Seitenwänden auf die Kugel (5) wirken, stufig ausgeführt und gegenseitig stufig gekoppelt sind, wobei die Rillen (3,4) auf diesen stufigen Oberflächen ausgeführt und miteinander derart gekoppelt sind, dass die in einem Bereich jeder Rille (3,4) vergrößert ausgeführte Wandhöhe (4) den Kugelradius wegen der Verringerung der gegenüberliegenden Rillenwände anderer Glieder (1,2) überschreitet,
**gekennzeichnet durch**
eine Verwendung zur Drehmomentübertragung in einem Getriebe mit zwei Gliedern (1, 2), von denen eines eine Planetenbewegung ausführt, wobei die Kugelverzahnung **durch** eine an einem ersten Glied (1) angeordnete geschlossene, umlaufende periodische Rille (3) und an einem zweiten Glied (2) ausgebildete, der Anzahl der Kugeln (5) der Kugelkette entsprechende Anzahl von Toroidalmulden (10) gebildet ist, die jeweils einem dem Kugelradius entsprechenden Drehkreisradius aufweisen.

2. Kugelverzahnung nach Anspruch 1,
**dadurch gekennzeichnet,**
**dass** die periodischen Rillen (66, 68) derart ausgeführt sind, dass die Kugeln (5) Axialbewegungen ausführen.

## Claims

1. A ball gearing for torque transmission, which includes members (1, 2), with periodic grooves (3,4) on facing surfaces of the members, and a ball chain that comes into engagement simultaneously with grooves of all the members (1, 2) in which the total height (A) of the periodic grooves (3, 4) of a cooperating pair does not exceed the ball diameter, wherein surfaces facing one another of the members are embodied in stepped fashion with grooves (3,4) that act with their side walls on the ball (S) and are coupled mutually in stepped fashion, and wherein the grooves (3,4) are embodied on theses stepped surfaces and are coupled with one another in such a way that the wall height (h) embodied in increased fashion in one region of each groove (3, 4) exceeds the ball radius on account of the reduction in the opposed groove walls of other members (1, 2),
**characterized by**
a use for torque transmission in a gear system having two members (1, 2), of which one executes a planetary motion, and the ball gearing is formed by a closed, encompassing periodic groove (3) disposed on a first member (1) and a number of toroidal troughs (10), corresponding to the number of balls (5) of the ball chain, which troughs each have a radius corresponding to the ball radius.

2. The ball gearing according to claim 1,
**characterized in that** the periodic grooves (66, 68) are embodied in such a manner that the balls (5) execute axial motions.

## Revendications

1. Engrènement à billes pour la transmission d'un couple de rotation, qui comprend des éléments (1, 2) avec des gorges périodiques (3, 4) sur des surfaces d'éléments en vis-à-vis et une chaîne de billes qui entre simultanément en engagement avec les gorges de tous les éléments (1, 2), la hauteur totale (A) des gorges périodiques (3, 4) d'une paire coopérante ne dépassant pas le diamètre des billes, sachant que des surfaces d'éléments en vis-à-vis, dotées de gorges (3, 4) qui agissent par leurs parois latérales sur les billes (5), sont réalisées échelonnées et sont mutuellement accouplées de manière échelonnée, sachant que les gorges (3, 4) sur ces surfaces échelonnées sont réalisées et sont mutuellement accouplées de telle sorte que la hauteur de paroi (h), réalisée agrandie dans une région de chaque gorge (3, 4), est supérieure au rayon des billes en raison de la diminution des parois opposées des gorges des autres éléments (1,2),
**caractérisé par** une utilisation pour la transmission d'un couple de rotation dans une transmission à deux éléments (1, 2) dont l'un accomplit un mouvement planétaire, sachant que l'engrènement à billes est formé par une gorge périodique périphérique (3) fermée, disposée sur un premier élément (1), et par un nombre, correspondant au nombre de billes (5) de la chaîne de billes, de dépression toroïdales (10) configurées sur un deuxième élément (2), lesquelles présentent chacune un rayon de cercle de révolution correspondant au rayon des billes.

2. Engrènement à billes selon la revendication 1, **caractérisé en ce que** les gorges périodiques (66, 68) sont réalisées de telle sorte que les billes (5) accomplissent des mouvements axiaux.
